# EUROPEAN PATENT SPECIFICATION

(11) **EP 3 232 325 B1**
(45) Date of publication and mention of the grant of the patent: **02.03.2022**
(21) Application number: 17165447.8
(22) Date of filing: 07.04.2017
(51) Int. Cl.: G06F 9/451, G06F 9/445

(54) **METHOD AND DEVICE FOR STARTING APPLICATION INTERFACE**
VERFAHREN UND VORRICHTUNG ZUM STARTEN EINER ANWENDUNGSSCHNITTSTELLE
PROCÉDÉ ET DISPOSITIF DE DÉMARRAGE D'INTERFACE D'APPLICATION

(30) Priority: 07.04.2016 CN 201610213431
(43) Date of publication of application: 18.10.2017
(73) Proprietor: Beijing Xiaomi Mobile Software Co., Ltd., Beijing 100085 (CN)
(72) Inventor: LONG, Hai, Haidian District, Beijing 100085 (CN); LIU, Hongjie, Haidian District, Beijing 100085 (CN); SONG, Jinshi, Haidian District, Beijing 100085 (CN)
(74) Representative: Jeffrey, Philip Michael

(56) References cited:
- WO-A1-2011/134836
- US-A1- 2016 061 623
- US-B1- 7 293 253

## Description

### TECHNICAL FIELD

The present disclosure generally relates to the field of electronic equipment, and more particularly, to a method and device for starting an application interface.

### BACKGROUND

Along with rapid development of smart terminals, there are more and more diversified application interfaces on a terminal. In order to conveniently switch between interfaces, a terminal may provide, in an application interface, a starting option for another application interface for conveniently switching from the application interface to the other application interface.

For example, for a first application interface and a second application interface, when a terminal displays the first application interface, a starting option for the second application interface is provided, and if a user intends to start the second application interface, the starting option may be clicked to trigger a starting instruction for the second application interface. When the terminal receives the starting instruction, a suspending instruction is sent to the first application interface at first, and after a certain period of time, when the first application interface is in a suspended state and returns a suspending response, the second application interface is started.

US 7293253 discloses that, for a software application that uses a first interface, a method is provided to allow the migration of the software application to a second interface instead of the first interface.

US 2016/061623 A1 discloses the provision of faster and more efficient user interfaces for mapping applications.

### SUMMARY

The present disclosure provides a method in claim 1, a device in claim 6, a computer program in claim 11 and a computer readable medium claim 12.

According to the present disclosure, when the starting instruction for the second application interface is received in the first application interface, it is determined whether the first application interface is currently interacting with the second application interface, and if they are not currently interacting, the second application interface may be directly started instead of being started after waiting until the first application interface is in the suspended state, so that internal logic disorder may be avoided, waiting time may also be saved, and a starting speed may be improved.

It is to be understood that the above general descriptions and detailed descriptions below are only exemplary and explanatory and not intended to limit the scope of the present invention which is defined by the appended independent claims. The dependent claims define preferred embodiments.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a flow chart showing a method for starting an application interface according to an exemplary embodiment.
Fig. 2 is a flow chart showing a method for starting an application interface according to another exemplary embodiment.
Fig. 3 is a flow chart showing a method for starting an application interface according to yet another exemplary embodiment.
Fig. 4 is a block diagram of a device for starting an application interface according to an exemplary embodiment.
Fig. 5 is a block diagram of a device for starting an application interface according to another exemplary embodiment.

### DETAILED DESCRIPTION

In order to make the purpose, technical solutions and advantages of the present disclosure clearer, the present disclosure will be further described below with reference to implementation modes and the drawings in detail. Here, schematic implementation odes of the present disclosure and descriptions thereof are adopted to explain the present disclosure and not intended to limit the present disclosure.

First of all, concepts involved in the embodiment of the present disclosure are explained as follows.
1: Home interface: a system desktop provided by a terminal, i.e. an interface displayed when the terminal is started or when a user clicks a Home key provided by the terminal.
2: Activity: Activity is a standard component for an Android platform. Actually an Activity is a single screen in an application, inherited from an Activity type, and it displays a User Interface (UI) formed by Views and a response event.

The embodiment of the present disclosure provides a method and device for starting an application interface, and the present disclosure will be described below with reference to the drawings in detail.

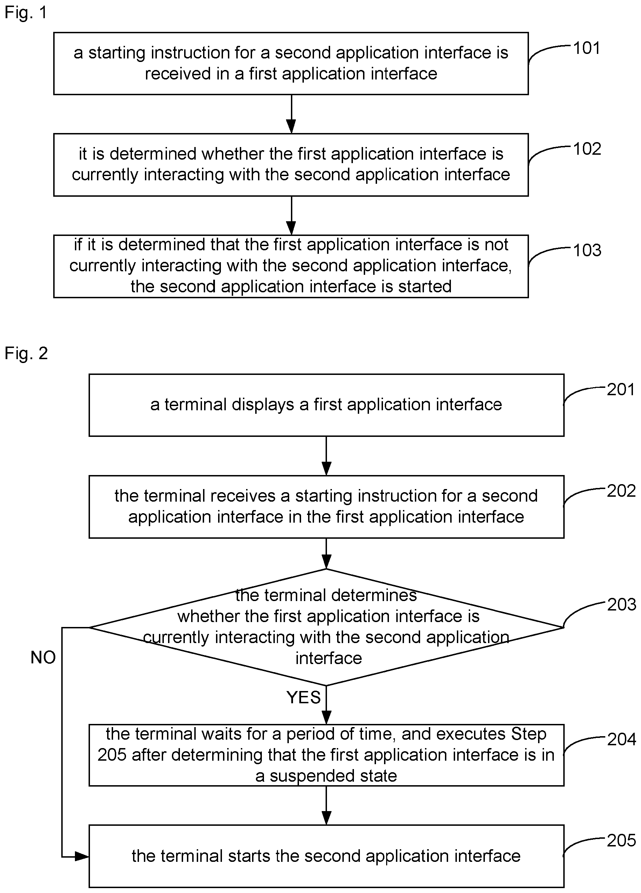

Fig. 1 is a flow chart showing a method for starting an application interface according to an exemplary embodiment, and as shown in Fig. 1, the method for starting the application interface is applied to a terminal, and includes the following steps:
Step 101: a starting instruction for a second application interface is received in a first application interface;
Step 102: it is determined whether the first application interface is currently interacting with the second application interface; and
Step 103: if it is determined that the first application interface is not currently interacting with the second application interface, the second application interface is started.

According to the method provided by the embodiments of the disclosure, when the starting instruction for the second application interface is received in the first application interface, it is determined whether the first application interface is currently interacting with the second application interface, and if they are not currently interacting, the second application interface may be directly started instead of being started after waiting until the first application interface is in the suspended state, so that internal logic disorder may be avoided, waiting time may also be saved, and a starting speed may be improved.

In another embodiment, the step that it is determined whether the first application interface is currently interacting with the second application interface includes that:
it is determined whether the starting instruction includes a main interface starting identifier, herein the main interface starting identifier is configured to indicate that an application interface triggering the starting instruction is a Home interface; and
if the starting instruction includes the main interface starting identifier, it is determined that the first application interface is not currently interacting with the second application interface.

In another embodiment, the step that it is determined whether the first application interface is currently interacting with the second application interface includes that:
it is determined whether the first application interface is an Activity interface; and
if the first application interface is not the Activity interface, it is determined that the first application interface is not currently interacting with the second application interface.

In another embodiment, the step that it is determined whether the first application interface is currently interacting with the second application interface includes that:
it is determined whether the first application interface and the second application interface are in different processes; and
if the first application interface and the second application interface are in different processes, it is determined that the first application interface is not currently interacting with the second application interface.

In another embodiment, the step that it is determined whether the first application interface is currently interacting with the second application interface includes that:
it is determined whether the starting instruction includes the main interface starting identifier;
if the starting instruction does not include the main interface starting identifier, it is determined whether the first application interface is the Activity interface;
if the first application interface is the Activity interface, it is determined whether the first application interface and the second application interface are in different processes; and
if the first application interface and the second application interface are in the same process, it is determined that the first application interface is currently interacting with the second application interface.

The method further includes that:
if it is determined that the first application interface is currently interacting with the second application interface, the second application interface is started after it is determined that the first application interface is in a suspended state.

All of the abovementioned optional technical solutions may be freely combined to form optional embodiments of the present disclosure, which will not be elaborated one by one herein.

Fig. 2 is a flow chart showing a method for starting an application interface according to an exemplary embodiment, and as shown in Fig. 2, the method for starting the application interface is applied to a terminal, and includes the following steps.

Step 201: the terminal displays a first application interface.

Wherein, the terminal may be equipment such as a mobile phone, a computer or a tablet computer, multiple applications may run on the terminal, and these applications may include a desktop application, a notification bar application, a BlueTooth (BT) application, a chatting application, a shopping application and the like. There are no limits made to the terminal and the applications on the terminal in the embodiment.

In the embodiment, both the first application interface and a second application interface may be any different application interfaces on the terminal. For example, the first application interface and the second application interface may be interfaces of different applications, and may also be different interfaces of the same application.

When the terminal displays the first application interface, a user may operate in the first application interface. For example, when the first application is a desktop application, the terminal displays a Home interface, and the user may view an application icon list in the Home interface, or, when the first application interface is a contact interface of a chatting application, the user may view contacts or select any contact for chatting in the contact interface.

Step 202: the terminal receives a starting instruction for the second application interface in the first application interface.

The first application interface may include a starting option of the second application interface, the user may click the starting option to trigger the starting instruction for the second application interface when intended to switch the first application interface to the second application interface, and at this moment, the terminal receives the starting instruction for the second application interface in the first application interface.

Wherein, the starting option may be an option in form of a button, an icon and the like, which will not be limited in the embodiment.

For example, when the first application interface is a Home interface, the Home interface including icons of multiple applications, the user may click the icon of a second application to trigger the starting instruction for the second application interface when intended to start the second application interface. Or, the first application interface is a chatting interface with a certain contact in a chatting application, and when the user receives a web link sent by the contact in the chatting interface and the web link is configured to turn to a commodity interface of a shopping application, the user may click the web link to trigger a starting instruction for the commodity interface of the shopping application.

Step 203: the terminal determines whether the first application interface is currently interacting with the second application interface, executes Step 204 if YES, and executes Step 205 if NO.

Step 204: the terminal waits for a period of time, and executes Step 205 after determining that the first application interface is in a suspended state.

Step 205: the terminal starts the second application interface.

In the related arts, in consideration of the fact that logic disorder may be caused and then normal running of the terminal may be influenced by directly starting of the second application interface upon reception of the starting instruction if the first application interface is currently interacting with the second application interface, the terminal may thus send a suspending instruction to the first application interface at first when receiving the starting instruction; the first application interface receives the suspending instruction, and returns a suspending response when finishing current interface operation and entering the suspended state; and at this moment, the terminal determines that the first application interface is in the suspended state and does not interact with the second application interface, and then starts the second application interface. In the above process, the terminal is required to wait for a period of time after receiving the starting instruction, and starts the second application interface only when determining that the first application interface is in the suspended state.

In the embodiment, in order to increase a starting speed, the terminal may determine whether the first application interface is currently interacting with the second application interface at first when receiving the starting instruction, and determines whether to wait according to a determination result.

If the first application interface is currently interacting with the second application interface, for avoiding internal logic disorder and keeping an original logic of the first application interface, the terminal is required to wait for a period of time, and starts the second application interface after determining that the first application interface is in the suspended state. That is, the terminal sends the suspending instruction to the first application interface, and starts the second application interface when the first application interface returns the suspending response.

During a practical application, if the terminal does not receive the suspending response returned by the first application interface within a preset time length after sending the suspending instruction to the first application interface, the second application interface may also be started.

If the first application interface is not currently interacting with the second application interface, the terminal directly starts the second application interface without waiting. At this moment, the terminal may still send the suspending instruction to the first application interface to indicate the first application interface to be suspended.

Wherein, multiple manners may be adopted for determining whether the first application interface is currently interacting with the second application interface, and for example, a determination process may include at least one of the following Step 1 to Step 3.

1: it is determined whether the starting instruction includes a main interface starting identifier.

Wherein, the main interface starting identifier is configured to indicate an application interface triggering the starting instruction is a Home interface, and if a starting instruction for any application interface is triggered on the Home interface, the starting instruction may include the main interface starting identifier. The main interface starting identifier may be a preset field or a segment of preset data in the starting instruction, which will not be limited in the embodiment.

If the starting instruction includes the main interface starting identifier, it is indicated that the first application interface is the Home interface and the user triggers the starting instruction for the second application interface on the Home interface. Since the Home interface is usually configured to start other application interfaces and interacts with the other application interface less, it may be determined that the first application interface is not currently interacting with the second application interface, starting the second application interface may not bring any influence on a desktop application and cause any logic disorder, and the second application interface may be directly started.

If the starting instruction does not include the main interface starting identifier, it is indicated that the first application interface is not the Home interface, and at this moment, it is unsure that the first application interface is not currently interacting with the second application interface. Then, the terminal may determine that the first application interface may be currently interacting with the second application interface, execute Step 204 to wait for a period of time and start the second application interface after determining that the first application interface is in the suspended state, or, the terminal may also execute the following Step 2 or 3 to continue determining whether the first application interface is currently interacting with the second application interface.

2: it is determined whether the first application interface is an Activity interface.

Wherein, the Activity interface may include an interface of a chatting application, an interface of a payment application, which will not be limited in the embodiment.

If the first application interface is not the Activity interface, it is indicated that the first application interface usually interacts with other application interfaces less, then it may be determined that the first application interface is not currently interacting with the second application interface, starting the second application interface may not bring any influence on running of a system and cause any logic disorder, and the second application interface may be directly started.

If the first application interface is the Activity interface, it is unsure that the first application interface is not currently interacting with the second application interface. Then, the terminal may determine that the first application interface may be currently interacting with the second application intcrfacc, execute Step 204 to wait for a period of time and start the second application interface after determining that the first application interface is in the suspended state, or, the terminal may also execute the following Step 3 to continue determining whether the first application interface is currently interacting with the second application interface.

3: it is determined whether the first application interface and the second application interface are in different processes.

Each process on the terminal may run one or more application interfaces, and if more than two application interfaces run in the same process, it is indicated that these application interfaces have associated data and may currently interact with one another.

If the first application interface and the second application interface are in different processes, it may be determined that the first application interface is not currently interacting with the second application interface, starting the second application interface may not bring any influence on the system and cause any logic disorder, and the second application interface may be directly started.

If the first application interface and the second application interface are in the same process, it is unsure that the first application interface is not currently interacting with the second application interface. Then, the terminal may determine that the first application interface may be currently interacting with the second application interface, execute Step 204 to wait for a period of time and start the second application interface after determining that the first application interface is in the suspended state.

In addition, a task queue may be maintained in a process to execute multiple tasks in the task queue, and if two application interfaces in the same process are in the same task, it is indicated that the two application interfaces have associated data and may currently interact with each other. While if two application interfaces in the same process are in different tasks, it may be determined that the two application interfaces are not currently interacting.

Therefore, when it is determined that the first application interface and the second application interface are in the same process, it is determined whether the first application interface and the second application interface are in the same task of the process, it may be determined that the first application interface is currently interacting with the second application interface if the first application interface and the second application interface are in the same task, and it may be determined that the first application interface is not currently interacting with the second application interface if the first application interface and the second application interface are in different tasks.

It is important to note that the terminal may adopt any one or more manners in Step 1 to Step 3 to determine whether the first application interface is currently interacting with the second application interface.

For example, when it is determined in any manner that the first application interface may currently interact with the second application interface, determination may be continued in another manner, the second application interface may be directly started if it is determined in any manner that the first application interface is not currently interacting with the second application interface, and when it is determined that the first application interface may currently interact with the second application interface in all of the three manners, it may finally be determined that the first application interface is currently interacting with the second application interface, and the second application interface may be started only after the first application interface is in the suspended state.

Or, the terminal may make such determination in the three manners in Step 1 to Step 3, and starts the second application interface only when determining that the first application interface is not currently interacting with the second application interface in all of the three manners. If it is determined in any manner that the first application interface may currently interact with the second application intcrfacc, it is determined that the first application interface is currently interacting with the second application interface, and the second application interface may be started only after the first application interface is in the suspended state.

Of course, the terminal may also make such determination in a manner except the three manners, which will not be limited in the embodiment.

It is important to note that Step 202 to Step 205 may be executed by an operating system of the terminal. For example, when the user triggers the starting instruction for the second application interface in the first application interface, the first application interface sends the starting instruction to the operating system, and the operating system determines whether the first application interface is currently interacting with the second application interface when receiving the starting instruction. If YES, the operating system sends the suspending instruction to the first application interface, and starts the second application interface after the first application interface returns the suspending response and it is determined that the first application interface is in the suspended state. If NO, the operating system directly starts the second application interface without waiting.

According to the method provided by the embodiment, when the starting instruction for the second application interface is received in the first application interface, the starting instruction is analyzed, it is determined under different application scenarios whether the first application interface is currently interacting with the second application interface, the second application interface is directly started instead of being started after waiting until the first application interface is in the suspended state if the they are not currently interacting with each other, and if they are currently interacting with each other, the second application interface is started after the first application interface is in the suspended state, so that a starting behavior may be dynamically regulated to avoid internal logic disorder, save waiting time and improve the starting speed.

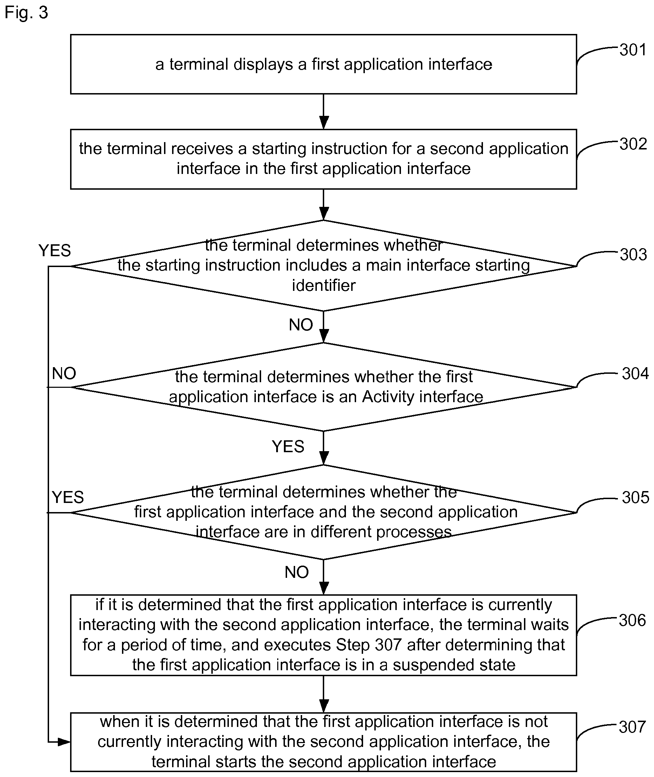

Fig. 3 is a flow chart showing a method for starting an application interface according to an exemplary embodiment, and as shown in Fig. 3, the method for starting the application interface is applied to a terminal, and includes the following steps.
Step 301: the terminal displays a first application interface.
Step 302: the terminal receives a starting instruction for a second application interface in the first application interface.
Step 303: the terminal determines whether the starting instruction includes a main interface starting identifier, executes Step 307 if YES, and executes Step 304 if NO.

If the starting instruction includes the main interface starting identifier, it may be directly determined that the first application interface is not currently interacting with the second application interface.

However, if the starting instruction does not include the main interface starting identifier, it may not be determined that whether the first application interface is currently interacting with the second application intcrfacc, it is continuously determined whether the first application interface is an Activity user to improve determination accuracy.

Step 304: the terminal determines whether the first application interface is the Activity interface, executes Step 305 if YES, and executes Step 307 if NO.

If the first application interface is not the Activity interface, it may be directly determined that the first application interface is not currently interacting with the second application interface.

However, if the first application interface is the Activity interface, it may not be determined that whether the first application interface is currently interacting with the second application interface, it is continuously determined whether the first application interface and the second application interface are in different processes to improve determination accuracy.

Step 305: the terminal determines whether the first application interface and the second application interface are in different processes, executes Step 307 if YES, and executes Step 306 if NO.

If the first application interface and the second application interface are in different processes, it may be directly determined that the first application interface is not currently interacting with the second application interface.

If the first application interface and the second application interface are in the same process, considering that the starting instruction does not include the main interface starting identifier and the first application interface is the Activity interface, the first application interface may currently interact with the second application interface, and at this moment, it may be determined that the first application interface is currently interacting with the second application interface.

Step 306: the terminal determines that the first application interface is currently interacting with the second application interface, waits for a period of time, and executes Step 307 after determining that the first application interface is in a suspended state.

Step 307: the terminal determines that the first application interface is not currently interacting with the second application interface, and starts the second application interface.

According to the method provided by the embodiment, when it is determined whether the first application interface is currently interacting with the second application interface, multiple manners are combined for determination, so that determination complexity is enhanced, accuracy of a determination result is improved, starting accuracy of the second application interface is further improved, internal logic disorder may be avoided, waiting time may be saved, and a starting speed may be increased.

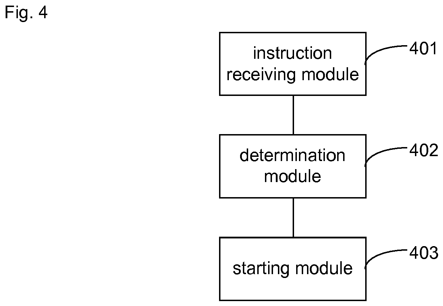

Fig. 4 is a block diagram of a device for starting an application interface according to an exemplary embodiment. Referring to Fig. 4, the device includes an instruction receiving module 401, a determination module 402 and a starting module 403.

The instruction receiving module 401 is configured to receive a starting instruction for a second application interface in a first application interface;
the determination module 402 is configured to determine whether the first application interface is currently interacting with the second application interface; and
the starting module 403 is configured to, if it is determined that the first application interface is not currently interacting with the second application interface, start the second application interface.

According to the device provided by the embodiments of the disclosure, when the starting instruction for the second application interface is received in the first application interface, it is determined whether the first application interface is currently interacting with the second application interface, and if they are not currently interacting, the second application interface may be directly started instead of being started after waiting until the first application interface is in a suspended state, so that internal logic disorder may be avoided, waiting time may also be saved, and a starting speed may be improved.

In another embodiment, the determination module 402 is configured to: determine whether the starting instruction includes a main interface starting identifier, herein the main interface starting identifier is configured to indicate that an application interface triggering the starting instruction is a Home interface; and if the starting instruction includes the main interface starting identifier, determine that the first application interface is not currently interacting with the second application interface.

In another embodiment, the determination module 402 is configured to determine whether the first application interface is an Activity intcrfacc; and if the first application interface is not the Activity interface, determine that the first application interface is not currently interacting with the second application interface.

In another embodiment, the determination module 402 is configured to determine whether the first application interface and the second application interface are in different processes; and if the first application interface and the second application interface are in different processes, determine that the first application interface is not currently interacting with the second application interface.

In another embodiment, the determination module 402 is configured to determine whether the starting instruction includes the main interface starting identifier; if the starting instruction does not include the main interface starting identifier, determine whether the first application interface is the Activity interface; if the first application interface is the Activity interface, determine whether the first application interface and the second application interface are in different processes; and if the first application interface and the second application interface are in the same process, determine that the first application interface is currently interacting with the second application interface.

The starting module 403 is further configured to, if it is determined that the first application interface is currently interacting with the second application interface, start the second application interface after it is determined that the first application interface is in a suspended state.

All of the abovementioned optional technical solutions may be freely combined to form optional embodiments of the present disclosure, which will not be elaborated one by one herein.

With respect to the devices in the above embodiments, the specific manners for performing operations for individual modules therein have been described in detail in the embodiments regarding the methods, which will not be elaborated herein.

It is important to note that: when the device for starting the application interface provided by the embodiment starts the application interface, descriptions are made only with division of each of the abovementioned functional modules as an example, and during a practical application, the abovementioned functions may be allocated to different functional modules for realization according to a requirement, that is, an internal structure of the device is divided into different functional modules to realize all or part of the abovementioned functions. In addition, the device for starting the application interface provided by the embodiment belongs to the same concept with the method embodiment for starting the application interface, and details about its specific implantation process refer to the method embodiment, and will not be elaborated herein.

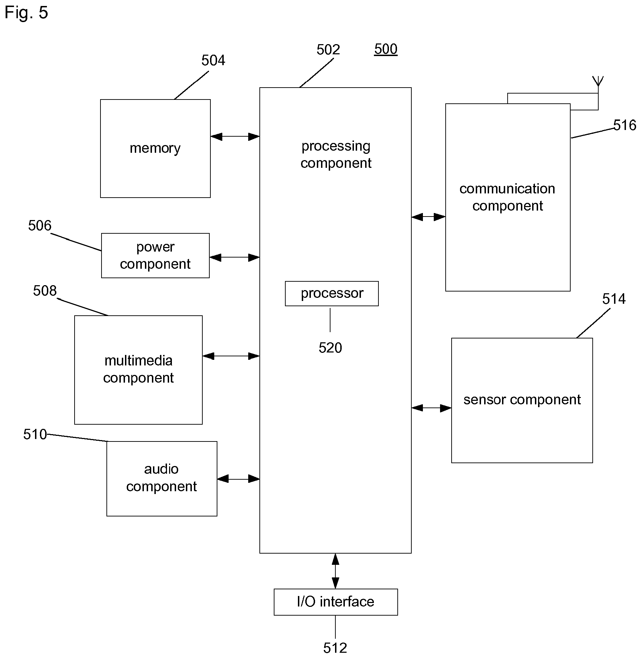

Fig. 5 is a block diagram of a device for starting an application interface according to another exemplary embodiment of the present disclosure. For example, the device 500 may be a mobile phone, a computer, a digital broadcast terminal, a messaging device, a gaming console, a tablet, a medical device, exercise equipment, a Personal Digital Assistant (PDA) and the like.

Referring to Fig. 5, the device 500 may include one or more of the following components: a processing component 502, a memory 504, a power component 506, a multimedia component 508, an audio component 510, an Input/Output (I/O) interface 512, a sensor component 514, and a communication component 516.

The processing component 502 typically controls overall operations of the device 500, such as the operations associated with display, telephone calls, data communications, camera operations, and recording operations. The processing component 502 may include one or more processors 520 to execute instructions to perform all or part of the steps in the abovementioned method. Moreover, the processing component 502 may include one or more modules which facilitate interaction between the processing component 502 and the other components. For instance, the processing component 502 may include a multimedia module to facilitate interaction between the multimedia component 508 and the processing component 502.

The memory 504 is configured to store various types of data to support the operation of the device 500. Examples of such data include instructions for any application programs or methods operated on the device 500, contact data, phonebook data, messages, pictures, video, etc. The memory 504 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 506 provides power for various components of the device 500. The power component 506 may include a power management system, one or more power supplies, and other components associated with the generation, management and distribution of power for the device 500.

The multimedia component 508 includes a screen providing an output interface between the device 500 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 508 includes a front camera and/or a rear camera. The front camera and/or the rear camera may receive external multimedia data when the device 500 is in an operation mode, such as a photographing mode or a video mode. Each of the front camera and the rear camera may be a fixed optical lens system or have focusing and optical zooming capabilities.

The audio component 510 is configured to output and/or input an audio signal. For example, the audio component 510 includes a Microphone (MIC), and the MIC is configured to receive an external audio signal when the device 500 is in the operation mode, such as a call mode, a recording mode and a voice recognition mode. The received audio signal may be further stored in the memory 504 or sent through the communication component 516. In some embodiments, the audio component 510 further includes a speaker configured to output the audio signal.

The I/O interface 512 provides an interface between the processing component 502 and a peripheral interface module, and the peripheral interface module may be a keyboard, a click wheel, a button and the like. The button may include, but not limited to: a home button, a volume button, a starting button and a locking button.

The sensor component 514 includes one or more sensors configured to provide status assessment in various aspects for the device 500. For instance, the sensor component 514 may detect an on/off status of the device 500 and relative positioning of components, such as a display and small keyboard of the device 500, and the sensor component 514 may further detect a change in a position of the device 500 or a component of the device 500, presence or absence of contact between the user and the device 500, orientation or acceleration/deceleration of the device 500 and a change in temperature of the device 500. The sensor component 514 may include a proximity sensor configured to detect presence of an object nearby without any physical contact. The sensor component 514 may also include a light sensor, such as a Complementary Metal Oxide Semiconductor (CMOS) or Charge Coupled Device (CCD) image sensor configured for use in an imaging application. In some embodiments, the sensor component 514 may also include an acceleration sensor, a gyroscope sensor, a magnetic sensor, a pressure sensor or a temperature sensor.

The communication component 516 is configured to facilitate wired or wireless communication between the device 500 and another device. The device 500 may access a communication-standard-based wireless network, such as a Wireless Fidelity (WiFi) network, a 2nd-Generation (2G) or 3rd-Generation (3G) network or a combination thereof. In an exemplary embodiment, the communication component 516 receives a broadcast signal or broadcast associated information from an external broadcast management system through a broadcast channel. In an exemplary embodiment, the communication component 516 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BT technology and another technology.

In an exemplary embodiment, the device 500 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned method for starting the application interface.

In an exemplary embodiment, there is also provided a non-transitory computer-readable storage medium including an instruction, such as the memory 504 including an instruction, and the instruction may be executed by the processor 520 of the device 500 to implement the abovementioned method for starting the application interface. For example, the non-transitory computer-readable storage medium may be a ROM, a Compact Disc Read-Only Memory (CD-ROM), a magnetic tape, a floppy disc, an optical data storage device and the like.

All of the abovementioned optional technical solutions may be freely combined to form optional embodiments of the present disclosure, which will not be elaborated one by one herein.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art. It is intended that the specification and examples be considered as exemplary only, with a true scope of the present disclosure being indicated by the following claims.

It will be appreciated that the present disclosure is not limited to the exact construction that has been described above and illustrated in the accompanying drawings, and that various modifications and changes may be made without departing from the scope thereof. It is intended that the scope of the present disclosure only be limited by the appended claims.

### INDUSTRIAL APPLICABILITY

According to the method and device provided by the embodiments of the disclosure, when the starting instruction for the second application interface is received in the first application interface, it is determined whether the first application interface is currently interacting with the second application interface, and if they are not currently interacting, the second application interface may be directly started instead of being started after waiting until the first application interface is in the suspended state, so that internal logic disorder may be avoided, waiting time may also be saved, and a starting speed may be improved.

## Claims

1. A method for starting a user interface of an application, **characterized in that**, the method comprises:
receiving (101) a starting instruction for a user interface of a second application in a user interface of a first application;
determining (102) whether the user interface of the first application is currently interacting with the user interface of the second application; and
if it is determined that the user interface of the first application is not currently interacting with the user interface of the second application, switching to (103) the user interface of the second application from the user interface of the first application; and
if it is determined that the user interface of the first application is currently interacting with the user interface of the second application, switching to the user interface of the second application after it is determined that the user interface of the first application is in a suspended state.

2. The method according to claim 1, wherein determining whether the user interface of the first application is currently interacting with the user interface of the second application comprises:
determining (303) whether the starting instruction comprises a main interface starting identifier, wherein the main interface starting identifier is configured to indicate that a user interface of an application triggering the starting instruction is a Home interface; and
if the starting instruction comprises the main interface starting identifier, determining that the user interface of the first application is not currently interacting with the user interface of the second application.

3. The method according to claim 1, wherein determining whether the user interface of the first application is currently interacting with the user interface of the second application comprises:
determining (304) whether the user interface of the first application is an Activity interface; and
if the user interface of the first application is not the Activity interface, determining that the user interface of the first application is not currently interacting with the user interface of the second application.

4. The method according to claim 1, wherein determining whether the user interface of the first application is currently interacting with the user interface of the second application comprises:
determining (305) whether the user interface of the first application and the user interface of the second application are in different processes; and
if the user interface of the first application and the user interface of the second application are in different processes, determining that the user interface of the first application is not currently interacting with the user interface of the second application.

5. The method according to any one of claims 1 to 4, wherein determining whether the user interface of the first application is currently interacting with the user interface of the second application comprises:
determining (303) whether the starting instruction comprises the main interface starting identifier;
if the starting instruction does not comprise the main interface starting identifier, determining (304) whether the user interface of the first application is the Activity interface;
if the user interface of the first application is the Activity interface, determining (305) whether the user interface of the first application and the user interface of the second application are in different processes; and
if the user interface of the first application and the user interface of the second application arc in a same process, determining that the user interface of the first application is currently interacting with the user interface of the second application.

6. A device for starting a user interface of an application, **characterized in that**, the device comprises:
an instruction receiving module (401) configured to receive a starting instruction for a user interface of a second application in a user interface of a first application;
a determination module (402) configured to determine whether the user interface of the first application is currently interacting with the user interface of the second application; and
a starting module (403) configured to:
if it is determined that the user interface of the first application is not currently interacting with the user interface of the second application, switch to the user interface of the second application from the user interface of the first application; and
if it is determined that the user interface of the first application is currently interacting with the user interface of the second application, switch to the user interface of the second application after it is determined that the user interface of the first application is in a suspended state.

7. The device according to claim 6, wherein the determination module (402) is configured to: determine whether the starting instruction comprises a main interface starting identifier, wherein the main interface starting identifier is configured to indicate that a user interface of an application triggering the starting instruction is a Home interface; and if the starting instruction comprises the main interface starting identifier, determine that the user interface of the first application is not currently interacting with the user interface of the second application.

8. The device according to claim 6, wherein the determination module (402) is configured to: determine whether the user interface of the first application is an Activity interface; and if the user interface of the first application is not the Activity interface, determine that the user interface of the first application is not currently interacting with the user interface of the second application.

9. The device according to claim 6, wherein the determination module (402) is configured to: determine whether the user interface of the first application and the user interface of the second application are in different processes; and if the user interface of the first application and the user interface of the second application are in different processes, determine that the user interface of the first application is not currently interacting with the user interface of the second application.

10. The device according to any one of claims 6 to 9, wherein the determination module (402) is configured to: determine whether the starting instruction comprises the main interface starting identifier; if the starting instruction does not comprise the main interface starting identifier, determine whether the user interface of the first application is the Activity interface; if the user interface of the first application is the Activity interface, determine whether the user interface of the first application and the user interface of the second application are in different processes; and if the user interface of the first application and the user interface of the second application are in a same process, determine that the user interface of the first application is currently interacting with the user interface of the second application.

11. A computer program including instructions for executing the steps of a method for starting a user interface of an application according to any one of claims 1 to 5 when said program is executed by a computer.

12. A recording medium readable by a computer and having recorded thereon a computer program including instructions for executing the steps of a method for starting a user interface of an application according to any one of claims 1 to 5.

## Patentansprüche

1. Verfahren zum Starten einer Benutzerschnittstelle einer Anwendung, **dadurch gekennzeichnet, dass** das Verfahren umfasst:
Empfangen (101) einer Startanweisung für eine Benutzerschnittstelle einer zweiten Anwendung in einer Benutzerschnittstelle einer ersten Anwendung;
Bestimmen (102), ob die Benutzerschnittstelle der ersten Anwendung aktuell mit der Benutzerschnittstelle der zweiten Anwendung interagiert; und
falls bestimmt wird, dass die Benutzerschnittstelle der ersten Anwendung nicht aktuell mit der Benutzerschnittstelle der zweiten Anwendung interagiert, Umschalten (103) zu der Benutzerschnittstelle der zweiten Anwendung ausgehend von der Benutzerschnittstelle der ersten Anwendung; und
falls bestimmt wird, dass die Benutzerschnittstelle der ersten Anwendung aktuell mit der Benutzerschnittstelle der zweiten Anwendung interagiert, Umschalten zu der Benutzerschnittstelle der zweiten Anwendung nachdem bestimmt wird, dass die Benutzerschnittstelle der ersten Anwendung in einem suspendierten Zustand ist.

2. Verfahren nach Anspruch 1, wobei Bestimmen, ob die Benutzerschnittstelle der ersten Anwendung aktuell mit der Benutzerschnittstelle der zweiten Anwendung interagiert, umfasst:
Bestimmen (303), ob die Startanweisung eine Hauptschnittstellenstartkennung umfasst, wobei die Hauptschnittstellenstartkennung konfiguriert ist, um anzugeben, dass eine Benutzerschnittstelle einer Anwendung, die die Startanweisung auslöst, eine Home-Schnittstelle ist; und
falls die Startanweisung die Hauptschnittstellenstartkennung umfasst, Bestimmen, dass die Benutzerschnittstelle der ersten Anwendung nicht aktuell mit der Benutzerschnittstelle der zweiten Anwendung interagiert.

3. Verfahren nach Anspruch 1, wobei Bestimmen, ob die Benutzerschnittstelle der ersten Anwendung aktuell mit der Benutzerschnittstelle der zweiten Anwendung interagiert, umfasst:
Bestimmen (304), ob die Benutzerschnittstelle der ersten Anwendung eine Aktivitätsschnittstelle ist; und
falls die Benutzerschnittstelle der ersten Anwendung nicht die Aktivitätsschnittstelle ist, Bestimmen, dass die Benutzerschnittstelle der ersten Anwendung nicht aktuell mit der Benutzerschnittstelle der zweiten Anwendung interagiert.

4. Verfahren nach Anspruch 1, wobei Bestimmen, ob die Benutzerschnittstelle der ersten Anwendung aktuell mit der Benutzerschnittstelle der zweiten Anwendung interagiert, umfasst:
Bestimmen (305), ob die Benutzerschnittstelle der ersten Anwendung und die Benutzerschnittstelle der zweiten Anwendung in unterschiedlichen Prozessen sind; und
falls die Benutzerschnittstelle der ersten Anwendung und die Benutzerschnittstelle der zweiten Anwendung in unterschiedlichen Prozessen sind, Bestimmen, dass die Benutzerschnittstelle der ersten Anwendung nicht aktuell mit der Benutzerschnittstelle der zweiten Anwendung interagiert.

5. Verfahren nach einem der Ansprüche 1 bis 4, wobei Bestimmen, ob die Benutzerschnittstelle der ersten Anwendung aktuell mit der Benutzerschnittstelle der zweiten Anwendung interagiert, umfasst:
Bestimmen (303), ob die Startanweisung die Hauptschnittstellenstartkennung umfasst;
falls die Startanweisung die Hauptschnittstellenstartkennung nicht umfasst, Bestimmen (304), ob die Benutzerschnittstelle der ersten Anwendung die Aktivitätsschnittstelle ist;
falls die Benutzerschnittstelle der ersten Anwendung die Aktivitätsschnittstelle ist, Bestimmen (305), ob die Benutzerschnittstelle der ersten Anwendung und die Benutzerschnittstelle der zweiten Anwendung in unterschiedlichen Prozessen sind; und
falls die Benutzerschnittstelle der ersten Anwendung und die Benutzerschnittstelle der zweiten Anwendung in einem gleichen Prozess sind, Bestimmen, dass die Benutzerschnittstelle der ersten Anwendung aktuell mit der Benutzerschnittstelle der zweiten Anwendung interagiert.

6. Vorrichtung zum Starten einer Benutzerschnittstelle einer Anwendung, **dadurch gekennzeichnet, dass** die Vorrichtung umfasst:
ein Anweisungsempfangsmodul (401), das konfiguriert ist, um eine Startanweisung für eine Benutzerschnittstelle einer zweiten Anwendung in einer Benutzerschnittstelle einer ersten Anwendung zu empfangen;
ein Bestimmungsmodul (402), das konfiguriert ist, um zu bestimmen, ob die Benutzerschnittstelle der ersten Anwendung aktuell mit der Benutzerschnittstelle der zweiten Anwendung interagiert; und
ein Startmodul (403), das für Folgendes konfiguriert ist:
falls bestimmt wird, dass die Benutzerschnittstelle der ersten Anwendung nicht aktuell mit der Benutzerschnittstelle der zweiten Anwendung interagiert, zu der Benutzerschnittstelle der zweiten Anwendung ausgehend von der Benutzerschnittstelle der ersten Anwendung umzuschalten; und
falls bestimmt wird, dass die Benutzerschnittstelle der ersten Anwendung aktuell mit der Benutzerschnittstelle der zweiten Anwendung interagiert, zu der Benutzerschnittstelle der zweiten Anwendung umzuschalten, nachdem bestimmt wird, dass die Benutzerschnittstelle der ersten Anwendung in einem suspendierten Zustand ist.

7. Vorrichtung nach Anspruch 6, wobei das Bestimmungsmodul (402) für Folgendes konfiguriert ist: Bestimmen, ob die Startanweisung eine Hauptschnittstellenstartkennung umfasst, wobei die Hauptschnittstellenstartkennung konfiguriert ist, um anzugeben, dass eine Benutzerschnittstelle einer Anwendung, die die Startanweisung auslöst, eine Home-Schnittstelle ist; und falls die Startanweisung die Hauptschnittstellenstartkennung umfasst, Bestimmen, dass die Benutzerschnittstelle der ersten Anwendung nicht aktuell mit der Benutzerschnittstelle der zweiten Anwendung interagiert.

8. Vorrichtung nach Anspruch 6, wobei das Bestimmungsmodul (402) für Folgendes konfiguriert ist: Bestimmen, ob die Benutzerschnittstelle der ersten Anwendung eine Aktivitätsschnittstelle ist; und falls die Benutzerschnittstelle der ersten Anwendung nicht die Aktivitätsschnittstelle ist, Bestimmen, dass die Benutzerschnittstelle der ersten Anwendung nicht aktuell mit der Benutzerschnittstelle der zweiten Anwendung interagiert.

9. Vorrichtung nach Anspruch 6, wobei das Bestimmungsmodul (402) für Folgendes konfiguriert ist: Bestimmen, ob die Benutzerschnittstelle der ersten Anwendung und die Benutzerschnittstelle der zweiten Anwendung in unterschiedlichen Prozessen sind; und falls die Benutzerschnittstelle der ersten Anwendung und die Benutzerschnittstelle der zweiten Anwendung in unterschiedlichen Prozessen sind, Bestimmen, dass die Benutzerschnittstelle der ersten Anwendung nicht aktuell mit der Benutzerschnittstelle der zweiten Anwendung interagiert.

10. Vorrichtung nach einem der Ansprüche 6 bis 9, wobei das Bestimmungsmodul (402) für Folgendes konfiguriert ist: Bestimmen, ob die Startanweisung die Hauptschnittstellenstartkennung umfasst; falls die Startanweisung die Hauptschnittstellenstartkennung nicht umfasst, Bestimmen, ob die Benutzerschnittstelle der ersten Anwendung die Aktivitätsschnittstelle ist; falls die Benutzerschnittstelle der ersten Anwendung die Aktivitätsschnittstelle ist, Bestimmen, ob die Benutzerschnittstelle der ersten Anwendung und die Benutzerschnittstelle der zweiten Anwendung in unterschiedlichen Prozessen sind; und falls die Benutzerschnittstelle der ersten Anwendung und die Benutzerschnittstelle der zweiten Anwendung in einem gleichen Prozess sind, Bestimmen, dass die Benutzerschnittstelle der ersten Anwendung aktuell mit der Benutzerschnittstelle der zweiten Anwendung interagiert.

11. Computerprogramm, das Anweisungen zum Ausführen der Schritte eines Verfahrens zum Starten einer Benutzerschnittstelle einer Anwendung nach einem der Ansprüche 1 bis 5, wenn das Programm von einem Computer ausgeführt wird, einschließt.

12. Aufzeichnungsmedium, das computerlesbar ist und ein Computerprogramm einschließlich Anweisungen zum Ausführen der Schritte eines Verfahrens zum Starten der einer Benutzerschnittstelle einer Anwendung nach einem der Ansprüche 1 bis 5 darauf aufgezeichnet aufweist.

## Revendications

1. Procédé de lancement d'une interface utilisateur d'une application, **caractérisé en ce que** le procédé consiste à :
recevoir (101) une instruction de lancement pour une interface utilisateur d'une seconde application dans une interface utilisateur d'une première application ;
déterminer (102) si l'interface utilisateur de la première application est actuellement en interaction avec l'interface utilisateur de la seconde application ; et
s'il est déterminé que l'interface utilisateur de la première application n'est pas actuellement en interaction avec l'interface utilisateur de la seconde application, basculer (103) vers l'interface utilisateur de la seconde application à partir de l'interface utilisateur de la première application ; et
s'il est déterminé que l'interface utilisateur de la première application est actuellement en interaction avec l'interface utilisateur de la seconde application, basculer vers l'interface utilisateur de la seconde application après avoir déterminé que l'interface utilisateur de la première application se trouve dans un état suspendu.

2. Procédé selon la revendication 1, dans lequel la détermination pour savoir si l'interface utilisateur de la première application est actuellement en interaction avec l'interface utilisateur de la seconde application consiste à :
déterminer (303) si l'instruction de lancement comprend un identificateur de lancement d'interface principal, dans lequel l'identificateur de lancement d'interface principal est configuré pour indiquer qu'une interface utilisateur d'une application déclenchant l'instruction de lancement est une interface Home ; et
si l'instruction de lancement comprend l'identificateur de lancement d'interface principal, déterminer que l'interface utilisateur de la première application n'est pas actuellement en interaction avec l'interface utilisateur de la seconde application.

3. Procédé selon la revendication 1, dans lequel la détermination pour savoir si l'interface utilisateur de la première application est actuellement en interaction avec l'interface utilisateur de la seconde application consiste à :
déterminer (304) si l'interface utilisateur de la première application est une interface Activity ; et
si l'interface utilisateur de la première application n'est pas l'interface Activity, déterminer que l'interface utilisateur de la première application n'est pas actuellement en interaction avec l'interface utilisateur de la seconde application.

4. Procédé selon la revendication 1, dans lequel la détermination pour savoir si l'interface utilisateur de la première application est actuellement en interaction avec l'interface utilisateur de la seconde application consiste à :
déterminer (305) si l'interface utilisateur de la première application et l'interface utilisateur de la seconde application sont dans des processus différents ; et
si l'interface utilisateur de la première application et l'interface utilisateur de la seconde application sont dans des processus différents, déterminer que l'interface utilisateur de la première application n'est pas actuellement en interaction avec l'interface utilisateur de la seconde application.

5. Procédé selon l'une quelconque des revendications 1 à 4, dans lequel la détermination pour savoir si l'interface utilisateur de la première application est actuellement en interaction avec l'interface utilisateur de la seconde application consiste à :
déterminer (303) si l'instruction de lancement comprend l'identificateur de lancement d'interface principal ;
si l'instruction de lancement ne comprend pas l'identificateur de lancement d'interface principal, déterminer (304) si l'interface utilisateur de la première application est l'interface Activity ;
si l'interface utilisateur de la première application est l'interface Activity, déterminer (305) si l'interface utilisateur de la première application et l'interface utilisateur de la seconde application sont dans des processus différents ; et
si l'interface utilisateur de la première application et l'interface utilisateur de la seconde application sont dans un même processus, déterminer que l'interface utilisateur de la première application est actuellement en interaction avec l'interface utilisateur de la seconde application.

6. Dispositif de lancement d'une interface utilisateur d'une application, **caractérisé en ce que** le dispositif comprend :
un module de réception d'instruction (401) configuré pour recevoir une instruction de lancement pour une interface utilisateur d'une seconde application dans une interface utilisateur d'une première application ;
un module de détermination (402) configuré pour déterminer si l'interface utilisateur de la première application est actuellement en interaction avec l'interface utilisateur de la seconde application ; et
un module de lancement (403) configuré pour :
s'il est déterminé que l'interface utilisateur de la première application n'est pas actuellement en interaction avec l'interface utilisateur de la seconde application, basculer vers l'interface utilisateur de la seconde application à partir de l'interface utilisateur de la première application ; et
s'il est déterminé que l'interface utilisateur de la première application est actuellement en interaction avec l'interface utilisateur de la seconde application, basculer vers l'interface utilisateur de la seconde application après avoir déterminé que l'interface utilisateur de la première application se trouve dans un état suspendu.

7. Dispositif selon la revendication 6, dans lequel le module de détermination (402) est configuré pour: déterminer si l'instruction de lancement comprend un identificateur de lancement d'interface principal, dans lequel l'identificateur de lancement d'interface principal est configuré pour indiquer qu'une interface utilisateur d'une application déclenchant l'instruction de lancement est une interface Home; et si l'instruction de lancement comprend l'identificateur de lancement d'interface principal, déterminer que l'interface utilisateur de la première application n'est pas actuellement en interaction avec l'interface utilisateur de la seconde application.

8. Dispositif selon la revendication 6, dans lequel le module de détermination (402) est configuré pour : déterminer si l'interface utilisateur de la première application est une interface Activity; et si l'interface utilisateur de la première application n'est pas l'interface Activity, déterminer que l'interface utilisateur de la première application n'est pas actuellement en interaction avec l'interface utilisateur de la seconde application.

9. Dispositif selon la revendication 6, dans lequel le module de détermination (402) est configuré pour : déterminer si l'interface utilisateur de la première application et l'interface utilisateur de la seconde application sont dans des processus différents ; et si l'interface utilisateur de la première application et l'interface utilisateur de la seconde application sont dans des processus différents, déterminer que l'interface utilisateur de la première application n'est pas actuellement en interaction avec l'interface utilisateur de la seconde application.

10. Dispositif selon l'une quelconque des revendications 6 à 9, dans lequel le module de détermination (402) est configuré pour : déterminer si l'instruction de lancement comprend l'identificateur de lancement d'interface principal ; si l'instruction de lancement ne comprend pas l'identificateur de lancement d'interface principal, déterminer si l'interface utilisateur de la première application est l'interface Activity ; si l'interface utilisateur de la première application est l'interface Activity, déterminer si l'interface utilisateur de la première application et l'interface utilisateur de la seconde application sont dans des processus différents ; et si l'interface utilisateur de la première application et l'interface utilisateur de la seconde application sont dans un même processus, déterminer que l'interface utilisateur de la première application est actuellement en interaction avec l'interface utilisateur de la seconde application.

11. Programme d'ordinateur comprenant des instructions pour exécuter les étapes d'un procédé de lancement d'une interface utilisateur d'une application selon l'une quelconque des revendications 1 à 5 quand ledit programme est exécuté par un ordinateur.

12. Support d'enregistrement lisible par un ordinateur et sur lequel est enregistré un programme d'ordinateur incluant des instructions pour exécuter les étapes d'un procédé de lancement d'une interface utilisateur d'une application selon l'une quelconque des revendications 1 à 5.
